# NEW EUROPEAN PATENT SPECIFICATION

(11) **EP 0 085 157 B2**
(45) Date of publication and mention of the opposition decision: **30.10.1996**
(45) Mention of the grant of the patent: 29.08.1990
(21) Application number: 82111442.8
(22) Date of filing: 10.12.1982
(51) Int. Cl.: G06K 7/12, B41J 2/005, C09D 11/02, C09B 19/00

(54) **Method and apparatus for identifying indicia**
Verfahren und Vorrichtung zum Erkennen von Zeichen
Procédé et dispositif pour les reconnaissances des données

(30) Priority: 01.02.1982 US 344667; 07.10.1982 US 433311
(43) Date of publication of application: 10.08.1983
(73) Proprietor: International Business Machines Corporation, Armonk, N.Y. 10504 (US)
(72) Inventor: Acitelli, Mario Adam, Charlotte North Carolina 28211 (US); Tynan, Richard Francis, Charlotte North Carolina 28215 (US); Wayson, Alan Robert, Concord North Carolina 28025 (US)
(74) Representative: Davies, Simon Robert

(56) References cited:
- DE-A- 1 794 248
- DE-A- 1 928 297
- DE-B- 2 530 905
- US-A- 3 566 120
- US-A- 3 705 043
- US-A- 4 007 462
- US-A- 4 243 694
- Taschenbuch der Physik, 5th edition, 1984, by H.Kuchling, p.364
- dtv Atlas zur Physik, Oct. 1987, by H. Breuer, p. 176
- Elektrotechnik-Elektronik, 3rd edition, 1988, by H.Lindner et al., p. 355-356
- "Introduction for applied optics for engineers", 1977, by Carlson, pages 120-123

## Description

This invention relates to a method of automatically identifying objects with characteristic indices, using an ink, and to a system for identifying indices marked on an object. This method is especially useful for the marking of financial documents, such as bank cheques, which typically are printed on patterned paper and which receiver overprinted marks from a variety of sources during their useful life.

Bank cheque processing equipment is known which employs an ink jet printer for applying unique bar code markings to bank cheques as they move through a high speed transport. The transport normally performs additional operations such as reading, microfilming and sorting. The bar code printers have employed fluorescent inks to make the marking more distinct in the presence of other inks normally found on bank cheques. Considerable interference still exists however because the fluorescent inks emit light in the visible spectrum and the other inks used to mark cheques are selected for their ability to absorb visible light. Furthermore, other materials, whether inks or the paper itself, may produce visible fluorescence, especially under the stimulation of ultraviolet light. Thus conventional bank cheque marking inks can interfere with the readability of known fluorescent bar code marking, either by covering the marking or by adding extraneous fluorescence in addition to the marking. Interference by quenching of the fluorescence can exist even where the bar code is printed on top of a material that is absorptive of light in the wavelength of the bar code fluorescence.

By way of example, US-A-4,007,462 describes, as column 1 lines 39-50, printing data marks on a document with ink including a fluorescent dye in order to avoid problems of printed data marks being overprinted by endorsements, legends etc. The document states that the use of fluorescent dye results in a better contrast between the printed information and the background. However, the document also states that this does not avoid all the problems since the luminescing ink, differing paper types and surface colour variation still cause problems.

US 3,946,203 describes a bar code reader for use, for example, with financial documents, the bars being formed from fluorescent ink. Preferably the excitation radiation is in a narrow blue band, with a peak at about 470 nm, which does not significantly overlap the narrow red band of fluorescent emanations from the excited ink, centered at about 600 nm. A somewhat similar system is described in US 4,196,846.

The object of the present invention is to provide an improved method of automatically identifying objects by marking the objects with indicia using an ink, and to an improved system for identifying the indicia marked on an object.

The invention relates to a method of automatically identifying objects such as bank cheques and other financial documents, which typically are printed on patterned paper and which receive overprinted marks from a variety of sources, such as conventional bank cheque marking inks, during their useful life, comprising the steps of marking said objects with characteristic indicia using an ink, subjecting said objects to exciting radiation, and selectively detecting radiation emanating from said indicia so as to detect said indicia, wherein said ink comprises a major portion of a carrier liquid that is capable of drying by evaporation and penetration of the material of said object without leaving any residue that is significantly absorptive of radiation either in the visible or in the near infrared portions of the spectrum, and a minor portion, having a concentration in the ink of a minimum of 0.09% by weight, of a dye which is a fluorescent agent that fluoresces mostly in the nearly infrared portion of the spectrum in the range from 650 nm to 800 nm, said exciting radiation includes substantially no radiation in the near infrared portion of the spectrum from 650 nm to 800 nm, and only near infrared radiation in the range from 650 nm to 800 nm emanating from said indicia is detected.

The invention also relates to a system for identifying indicia which have been marked on an object such as a bank cheque or other financial document, which typically is printed on patterned paper and which receives overprinted marks from a variety of sources, such as conventional bank cheque marking inks, during its useful life, using a method as described above, comprising irradiating means to irradiate said marked object, and detecting means to detect radiation emanating from said object, wherein said irradiating means includes a low pass filter so that the radiation used to irradiate said object includes substantially no radiation in the near infrared portion of the spectrum in the range from 650 to 800 nm, and said detecting means includes a high pass filter so that only near infrared radiation in the range from 650 nm to 800 nm emanating from said object can be detected.

In carrying out the invention, there has been employed as the active ingredient, those phenoxazine derivative dyes based on the structure 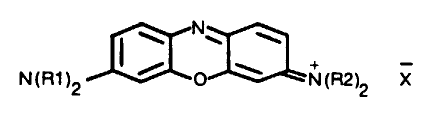 wherein R1 and R2 are alkyl and X is the anion.

Such dyes include more complex derivatives such as 3,7-Bis(ethylaminol-2,8-dimethylphenoxin-5-ium perchlorate having the structure

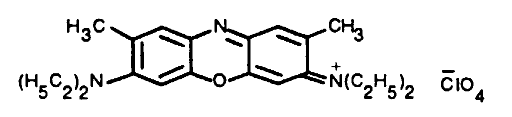

Fused ring derivatives are also possible; one example being the benzo phenoxazines which have the structure 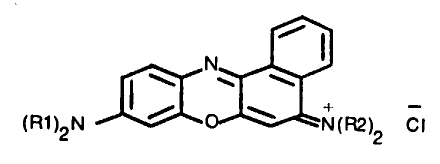 wherein R1 and R2 are alkyl and the anion is chloride.

These materials not only provide the desired fluorescence, but, even at the low concentrations which produce the most efficient fluorescent response, these dyes have a sufficient visible colour intensity to allow their use for marking human readable text. A single printer using a single ink can thus bring both machine and human readable data. In a more general sense, those dyes that fluoresce in the preferred range of 650 to 800 nm will tend to absorb light in the visible spectrum and thus be useful for making human readable markings. Materials that fluoresce at longer infrared wavelengths tend to be invisible to the naked eye.

The preferred phenoxazine dye is 3,7-BIS(diethylamino)phenoxazonium nitrate which has the structure

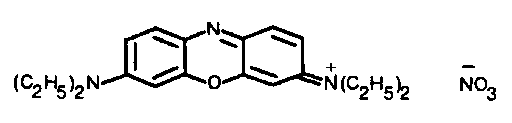

This structure is derived from the more general structure by selecting R1 and R2 to be ethyl and the anion X to be nitrate. This dye is compatible with typical ink jet ink vehicles and has most of its fluorescent energy at wavelengths in excess of 700 nm. Furthermore it marks with a clearly visible light blue colour even when used in extremely low concentrations, e.g. 0.10% to 0.15% by weight in the ink vehicle.

The scope of the invention is defined by the appended claims; and how it can be carried into effect is hereinafter particularly described with reference to the accompanying drawings, in which:-
FIGURE 1 is a schematic side view of a document transport including an ink jet printer for applying the material of the invention to documents;
FIGURE 2 is a schematic side view of a document transport including a reader/sorter for detecting the pattern marking of the material and controlling the operation of the machine in response thereto; FIGURE 3 is a graph showing the operating spectrum of the preferred dye used in ink according to the invention and of the filters used in conjunction with that dye;
FIGURE 4 is a facsimile of the back side of a typical bank cheque illustrating the various markings made during the processing of the cheque; and
FIGURE 5 is a graph showing the relative light transmittance as a function of light wavelength for a variety of typical inks used in bank cheque marking.

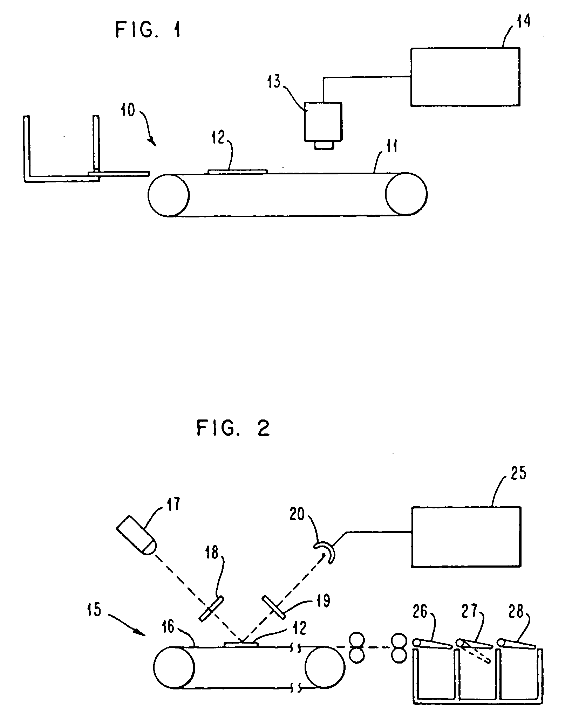

A document preparation apparatus 10 (Fig. 1) comprises a high speed transport 11 for moving documents, such as bank cheques 12, past the operating head of an ink jet printer 13. Printer 13 is controlled by a computer 14 to apply a unique identifying marks, such as a bar code, to the cheque 12, using an ink having fluorescent material according to the invention. The identifying marking can have whatever data content is desired. For example, a code representing the institution processing the cheque together with a serial number indicating the dtate and sequence number of the cheque processed would be useful in assisting that institution to locate cheques which they have previously processed within a specified time period. Furthermore, if the code indicates the immediate source of the cheque, the code marking can assist the automatic return of the cheque to its source when required by the transaction. It is preferred to provide control means for the printer 13, which causes printing in separate fields on the cheques 12, as required, to prevent successive institutions having printers using the fluorescent ink from overprinting each other's identifying codes. Such control means forms no part of our invention and is not necessary for an understanding of it.

A document processing system 15 (Fig. 2) for automatically handling cheques 12 which have been marked with the fluorescent ink according to the invention, includes a transport 16 which moves the cheques 12 past a reading station where the markings applied are detected. The reading station consists of a light source 17 of activating radiation which produces visible light directed at the surface of cheque 12. A low-pass filter 18 blocks that portion of the source radiation falling in the near infrared spectrum, i.e. above about 650 nm. The light reaching the cheque 12 otherwise may be either broad band or narrow band but should contain a substantial portion of its light energy at wavelengths near the absorption peak of the fluorescent material, e.g. 650 nm. The fluorescent markings on cheque 12 respond to the activating radiation by emitting light predominantly in the near infrared spectrum, i.e. between 650 and 800 nm. This fluorescent response passes unimpeded through a high pass filter 19 to photodetector 20. Visible light reflected from the surface of cheque 12 is blocked by filter 19 so that excitation of photodetector 20 results substantially entirely from fluorescent emanating from the markings of the indicia on cheque 12.

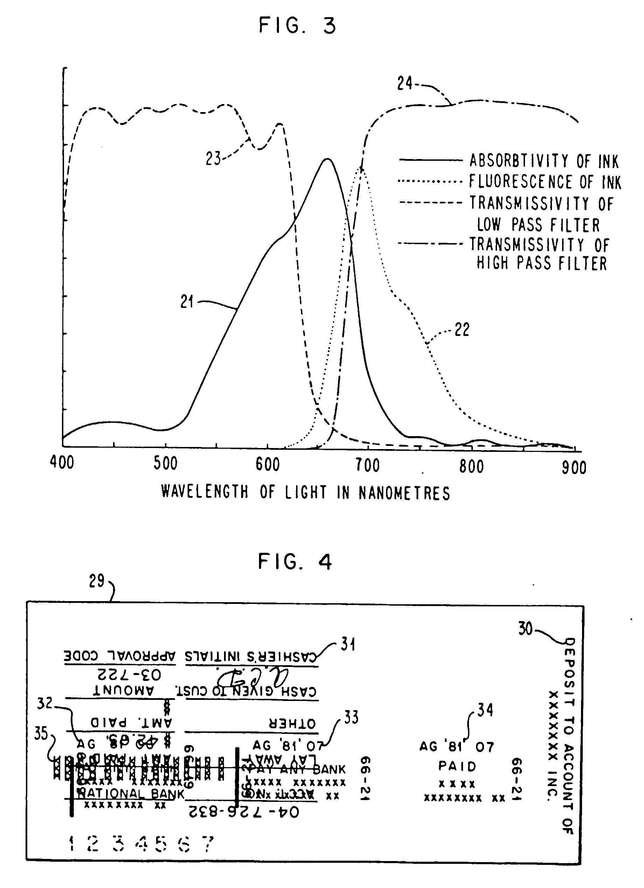

Figure 3 illustrates the spectral behaviour of the ink; curve 21 represents its light absorptivity at different wavelengths, and curve 22 represents its fluorescent emission at different wavelengths. The vertical scale is not shown because the curves are not reproduced to a common scale. Curve 22 actually much smaller than curve 21.

Figure 3 also shows the spectral performance of the low pass and high pass filters 18 and 19 by curves 23 and 24, respectively. Filter 18 (curve 23) blocks the transmission to cheque 12 of light in near infrared wavelengths capable of being passed by filter 19 (curve 24), but passes a substantial amount of visible light up to about 625 nm which is near the absorptivity peak of the fluroescent material. This visible light stimulates the fluorescent response of curve 22. It can be seen that most of the energy emitted by the ink, represented by the area under curve 22, above 700 nm will pass filter 19 (curve 24), whereas the visible light that excites the ink is blocked by filter 19 (curve 24).

Control system 25 (Fig. 2) includes pattern recognition circuitry appropriate to the particular code patterns recorded which forms no part of our invention, to respond to the signals produced by photodetector 20, thus identifying the cheque 12 in accordance with the content of the indicia originally recorded. The cheque thus identified can be further processed automatically, for example, by being directed to a specific one of a plurality of sort bins 26, 27 and 28. More specifically, if a bank had marked all the cheques it processes with indicia indicating its own identity, using equipment as in Fig. 1, this bank could then automatically separate such cheques from a supply of cheques received from an external source, thus identifying cheques it has previously processed. By also encoding the identity of the bank or other depositor from whom the cheque was received, the cheque can later be sorted back automatically to its source, if return processing is required.

Figure 4 shows the back of a bank cheque 29 with typical markings such as handwritten endorsement 30, a rubber stamp and filled-in credit check block 31, and rubber stamp endorsements 32, 33 and 34, which may be of different colours. Markings 35 are made in accordance with our invention, using the ink jet printer 13 and an ink having a fluorescent emission in the near infrared range of electromagnetic radiation. Markings 35 are shown in the form of a bar code. The particular code format is not critical to the understanding of this invention nor does it form any part of this invention. From Fig. 4, it can be seen that the various markings 30, 31, 32, 33 and 34 occur in scattered fashion over the back of the cheque 29. The marking 35 can be placed on the cheque before or after the other markings, depending upon the sequence of processing of the cheque. The materials used in making the markings 30 to 34 are generally solvent-based dyes which are absorptive of light in the visible range.

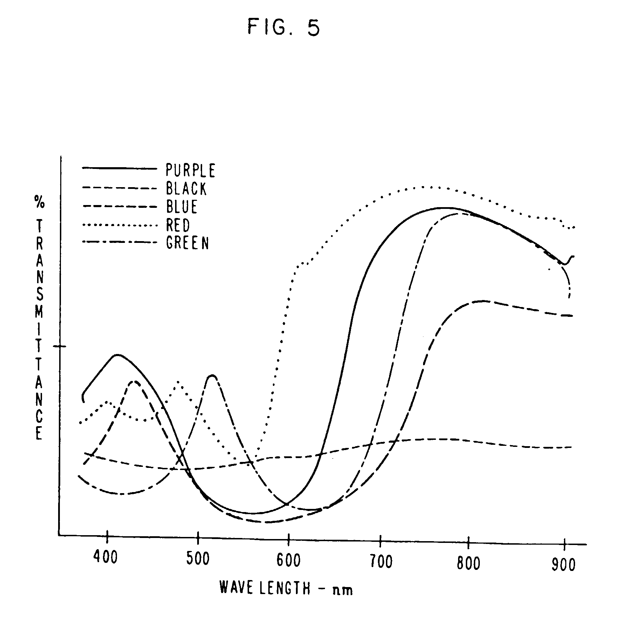

Most of these same inks are much more transparent to light in the near infrared. The curves of Fig. 5 were produced by measuring the reflectance of dense spots of various inks to light of various wavelengths. The light which is not reflected is absorbed. High reflectance indicates that light of a particular wavelength would not be absorbed, but would be transmitted by the ink. Thus the fluorescence of the markings 35 of the invention can be reliably detected even in the presence of the other markings 30 to 34, whether they are placed on the cheque 29 before or after the markings 35 have been applied. The inks shown are stamp pad inks of the colours indicated. Typically most of these inks show relatively lower transmittance below 700 nm than above 700 nm.

As a preferred means of implementing the invention, it has been determined that phenoxazine dyes of the structure:- 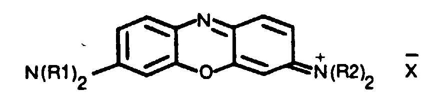 where R1 and R2 are alkyl and where X is the anion, are particularly convenient and effective. Other materials, such as carbocyanine dyes have been found to fluoresce in the desirable infrared spectrum but have significantly lower fluorescence efficiency than the phenoxazine dyes.

The preferred phenoxazine dye is 3,7-BIS(diethylamino)phenoxazonium nitrate. This dye fluoresces at a peak of 710 nm in response to visible light, and has its peak maximum absorptivity at about 650 nm. The preferred use of this material is in a vehicle that is suitable for use in an ink jet printer. The nitrate form of this material is preferred over the chloride form because it is less corrosive in the ink jet environment.

| % by Weight | Component | Function |
|---|---|---|
| 0.12 | 3.7-BOS | fluorescence |
| | (diethylamino) | |
| | phenoxazonium | |
| | nitrate | |
| | | |
| 5.0 | 2- (2-Butoxy ethoxy) ethanol | penetrant |
| | | |
| 26.0 | polyethylene | humectant |
| | glycol 200 | |
| | | |
| 0.3 | I N sodium | adjust pH |
| | hydroxide | |
| | | |
| 0.65 | potassium | buffer |
| | hydrogen | |
| | pthalate | |
| | | |
| 66.97 | deionized | solvent |
| | water | |

The foregoing formulation is essentially a water-based ink. The water as well as the polyethylene glycol and the 2-(2-Butoxy ethoxy)ethanol dry by evaporation and and pentration of printing substrate, thus leaving the dye unobstructed in its printed form. Because the dye is highly soluble it does not tend to contaminate the ink jet printer structure.

Ink jet inks are also formulated on the basis of an alcohol solvent, e.g. methanol or, in the case of an impulse type jet ink, a more viscous solvent such as ethylene glycol. Phenoxazine dyes used in accordance with the invention, are both soluble and otherwise compatible with carriers of these types, as well.

Other constituents of the ink jet vehicle are selected for reasons known in the ink jet art unrelated to the invention. It is important however, that the pH of the ink vehicle be at or below the value of 6, because phenoxazine dyes have minimum deterioration with time in the presence of acid. Also, it is preferred to keep the concentration of the fluorescent dye to between 0.09 and 0.12 percent by weight of the total ink solution to maximize its fluorescent efficiency while maintaining its ordinary visibility.

When the ink is to be used on documents having coloured surfaces, such as light blue bank cheques, we prefer to increase the fluorescent dye concentration from beyond its expected fluorescent optimum of 0.12% to about 0.35%. The increased concentration of the dye overcomes masking tendency of the document surface colours and produces an unexpectedly clearer fluorescent output.

Ink formulations to be used according to the method and in the system claimed are:

### Example 1

An ink solution was produced in accordance with the preferred formulation set forth above. The solution produced has an intense blue colour and. when applied to ordinary paper, dried to a light blue colour. A paper test specimen produced in this manner was subjected to visible light from an incandescent lamp. The fluorescent response was measured using an arbitrary scale. The output fluorescence was a maximum at about 710 nm.

### Example 2

A number of test specimens were produced by marking paper with ink in accordance with Example 1. The markings were overlaid by a variety of typical inks of various colours and densities. In a majority of cases, the fluorescent response of the material was clearly distinguishable by a silicon diode photodetector which viewed the specimen through a filter blocking light below wavelengths of 650 nm.

### Example 3

An ink solution was produced in accordance with the preferred formulation set forth above except that the chloride anion was used in place of the nitrate. The solution produced has an intense blue colour and, when applied to ordinary paper, dried to a light blue colour. A paper test specimen produced in this manner was subjected to visible light from an incandescent lamp. This fluorescent response was measured using an arbitrary scale. The output fluorescence was a maximum at about 710 nm.

### Example 4

A number of test specimens were produced by making paper with ink in accordance with Example 3. The markings were overlaid by a variety of typical inks of various colours and densities. In a majority of cases, the fluroescent response of the material was clearly distinguishable by a silicon diode photodetector which viewed the specimen through a filter blocking light below wavelengths of 650 nm.

## Claims

1. A method of automatically identifying objects such as bank cheques and other financial documents, which typically are printed on patterned paper and which receive overprinted marks from a variety of sources, such as conventional bank cheque marking inks, during their useful life, comprising the steps of marking said objects with characteristic indicia using an ink, subjecting said objects to exciting radiation, and selectively detecting radiation emanating from said indicia so as to detect said indicia,
wherein
said ink comprises a major portion of a carrier liquid that is capable of drying by evaporation and penetration of the material of said object without leaving any residue that is significantly absorptive of radiation either in the visible or in the near infrared portions of the spectrum, and a minor portion, having a concentration in the ink of a minimum of 0.09% by weight, of a dye which is a fluorescent agent that fluoresces mostly in the nearly infrared portion of the spectrum in the range from 650 nm to 800 nm,
said exciting radiation includes substantially no radiation in the near infrared portion of the spectrum from 650 nm to 800 nm, and
only near infrared radiation in the range from 650 nm to 800 nm emanating from said indicia is detected.

2. A method of automatically identifying objects as claimed in Claim 1 characterised in that the minor portion of the dye in the ink has a concentration in the range from 0.09% to 0.35% by weight.

3. A system for identifying indicia which have been marked on an object such as a bank cheque or other financial document, which typically is printed on patterned paper and which receives overprinted marks from a variety of sources, such as conventional bank cheque marking inks, during its useful life, using a method in accordance with claim 1 or claim 2, comprising irradiating means (17, 18) to irradiate said marked object, and detecting means (19, 20) to detect radiation emanating from said object,
wherein
said irradiating means (17, 18) includes a low pass filter (18) so that the radiation used to irradiate said object includes substantially no radiation in the near infrared portion of the spectrum in the range from 650 to 800 nm, and
said detecting means (19, 20) includes a high pass filter (19) so that only near infrared radiation in the range from 650 nm to 800 nm emanating from said object can be detected.

## Patentansprüche

1. Verfahren zur automatischen Erkennung von Gegenständen wie Bankschecks und anderen Finanzdokumenten, die typischerweise auf strukturiertes Papier gedruckt sind und die während ihrer Nutzungslebensdauer darübergedruckte Markierungen von einer Vielzahl von Quellen empfangen, wie herkömmlichen Markierungstinten für Bankschecks, das die Schritte des Markierens der Gegenstände mit charakteristischen Zeichen unter Verwendung einer Tinte, des Bestrahlens der Gegenstände mit einer anregenden Strahlung und des selektiven Detektierens von Strahlung, die von den Zeichen ausgeht, um die Zeichen zu detektieren, umfaßt,
wobei
die Tinte einen Majoritätsanteil einer Trägerflüssigkeit, die durch Verdunstung getrocknet werden und in das Material des Gegenstandes eindringen kann, ohne irgendeinen Rückstand zurückzulassen, der für Strahlung entweder im sichtbaren oder in den nahen Infrarot-Bereichen des Spektrums signifikant absorbierend ist, und einen Minoritätsanteil eines Farbstoffes beinhaltet, der in der Tinte eine Konzentration von mindestens 0,09 Gewichtsprozent aufweist, der ein Fluoreszenzagens ist, das hauptsächlich im nahen Infrarotbereich des Spektrums im Bereich von 650 nm bis 800 nm fluoresziert,
wobei die anregende Strahlung im wesentlichen keine Strahlung im nahen Infrarotbereich des Spektrums von 650 nm bis 800 nm beinhaltet und
lediglich nahe Infrarotstrahlung im Bereich von 650 nm bis 800 nm, die von den Zeichen ausgeht, detektiert wird.

2. Verfahren zur automatischen Erkennung von Gegenständen, wie in Anspruch 1 beansprucht, dadurch gekennzeichnet, daß der Minoritätsanteil des Farbstoffs in der Tinte eine Konzentration im Bereich von 0,09 Gewichtsprozent bis 0,35 Gewichtsprozent aufweist.

3. System zur Erkennung von Zeichen, die auf einem Gegenstand wie einem Bankscheck oder einem anderen Finanzdokument angebracht wurden, das typischerweise auf strukturiertes Papier gedruckt ist und das während seiner Nutzungslebensdauer darübergedruckte Markierungen von einer Vielzahl von Quellen empfängt, wie herkömmlichen Markierungstinten für Bankschecks, das ein Verfahren gemäß Anspruch 1 oder 2 verwendet und Bestrahlungsmittel (17, 18) zur Bestrahlung des markierten Gegenstandes sowie Detektionsmittel (19, 20) zur Detektierung von Strahlung beinhaltet, die von dem Gegenstand ausgeht,
wobei
die Bestrahlungsmittel (17, 18) einen Tiefpaßfilter (18) beinhalten, so daß die Strahlung, die zur Bestrahlung des Gegenstandes verwendet wird, im wesentlichen keine Strahlung im nahen Infrarotbereich des Spektrums im Bereich von 650 nm bis 800 nm enthält, und
die Detektionsmittel (19, 20) einen Hochpaßfilter (19) beinhalten, so daß lediglich nahe Infrarotstrahlung im Bereich von 650 nm bis 800 nm, die von dem Objekt ausgeht, detektiert werden kann.

## Revendications

1. Procédé pour identifier automatiquement des objets tels que des chèques bancaires et autres documents financiers, qui sont imprimés de façon caractéristique sur du papier à motifs et qui reçoivent pendant leur vie utile des marquages en surimpression provenant d'une diversité de sources, telles que des encres de marquage de chèques bancaires classiques, comprenant les étapes consistant à marquer sur lesdits objets des signes caractéristiques en utilisant en encre, à soumettre lesdits objets à une radiation d'excitation, et à détecter de façon sélective la radiation émanant desdits signes de façon à détecter lesdits signes,
dans lequel
ladite encre comprend en majeure partie un liquide support qui est capable de sécher par évaporation et de pénétrer dans la matière dudit objet sans laisser de résidu quelconque, qui absorbe de façon significative une radiation soit dans la partie visible, soit dans la partie de l'infrarouge proche du spectre, et une partie mineure, qui présente une concentration dans l'encre au minimum de 0,09 % en poids, d'un colorant qui est un agent fluorescent qui émet une fluorescence principalement dans la partie de l'infrarouge proche du spectre dans la plage de 650 nm à 800 nm,
ladite radiation d'excitation ne comprend pratiquement pas de radiations dans la partie de l'infrarouge proche du spectre de 650 nm à 800 nm, et
seule la radiation dans l'infrarouge proche dans la plage de 650 nm à 800 nm émanant desdits signes est détectée.

2. Procédé pour identifier automatiquement des objets selon la revendication 1, caractérisé en ce que la partie mineure du colorant dans l'encre a une concentration dans la plage de 0,09 à 0,35 % en poids,

3. Système pour identifier des signes qui ont été marqués sur un objet tel qu'un chèque bancaire ou autre document financier, qui est imprimé de façon caractéristique sur un papier à motifs et qui reçoit pendant sa vie utile des marquages en sur-impression depuis une diversité de sources telles que des encres de marquage de chèques bancaires classiques, utilisant un procédé selon la revendication 1 ou la revendication 2, comprenant des moyens d'irradiation (17, 18) pour irradier ledit objet marqué et des moyens de détection (19, 20) pour détecter la radiation émanant dudit objet,
dans lequel
lesdits moyens d'irradiation (17, 18) comprennent un filtre passe-bas (18) de sorte que la radiation utilisée pour irradier ledit objet ne comprend pratiquement pas de radiations dans la partie de l'infrarouge proche du spectre dans la plage de 650 à 800 nm, et
lesdits moyens de détection (19, 20) comprennent un filtre passe-haut (19) de sorte que seule la radiation dans l'infrarouge proche dans la plage de 650 nm à 800 nm émanant dudit objet puisse être détectée.
